# EUROPEAN PATENT APPLICATION

(11) **EP 2 071 434 A2**
(43) Date of publication of application: **17.06.2009**
(21) Application number: 08014788.7
(22) Date of filing: 20.08.2008
(51) Int. Cl.: G06F 3/041, G06F 3/047

(54) **Device for scanning and detecting touch point of touch control panel and method thereof**

(30) Priority: 11.12.2007 TW 96147176
(71) Applicant: TPK Touch Solutions Inc., Taipei City 106 (TW)
(72) Inventor: Liu, Chen-Yu, Jhongli City Taoyuan County Taiwan 320 (TW)
(74) Representative: Muttock, Neil John

(57) **Abstract**

A device for scanning and detecting a touch point of a touch control panel is disclosed, wherein a driving/scanning circuit (4) carries out one-end-sequential-driving or both-end-sequential-driving for driving each elongate conductive strip (X1, ..., Xn) of a first conductive layer (11) of the touch control panel, and a scan sensing circuit (6) carries out one-end-sequential-scanning, both-end-sequential-scanning or sequential both-end-simultaneous-scanning operation over each elongate conductive strips (Y1, ..., Yn) of a second conductive layer (21) of the touch control panel. Based on the result of the scanning operation that the scan sensing circuit (6) performs over the elongate conductive strips (Y1, ..., Yn) of the second conductive layer (21), at least one touch location can be detected on each elongate conductive strip (X1, ..., Xn) of the second conductive layer (21) with respect to each elongate conductive strip (X1, ..., Xn) of the first conductive layer (11).

## Description

### FIELD OF THE INVENTION

The present invention relates to a touch control device, and in particular to a device for scanning and detecting a touch point of a touch control panel and a method thereof.

### BACKGROUND OF THE INVENTION

A conventional touch panel includes a glass substrate having a top surface coated with a layer of transparent conductor, such as ITO conductive layer. The glass substrate and the transparent conductive layer together form a piece of electrically conductive glass panel. The electrically conductive glass panel is provided with another glass substrate or film arranged thereabove, and the another glass substrate or film is coated, on a bottom surface thereof, with a transparent conductive layer, corresponding to the transparent conductive layer of the glass panel. Insulation spacers are arranged between the transparent conductive layers of the glass panel and the film to space the transparent conductive layers.

To detect the location where a touch or depression occurs, conventionally, a micro-controller (5) alternately detects the voltage level in the X-axis and the Y-axis and the divided voltage detected from the touch location for the X-axis and the Y-axis is used to calculate and determine the location of touch.

In other conventional technology, a conductive layer is formed as a structure of elongate conductive strips and scanning is carried out to detect the location of touch. For example, US Patent No. 5,181,030 discloses a conductive layer having a structure comprised of a plurality of elongate conductive strips and the elongate conductive strips of two axial directions are perpendicular to each other, wherein the location of touch can be determined by means of divided voltage and spatial relationship. In this patent, there must have a sufficient resistance between the first and second conductive layers to ensure proper detection.

### SUMMARY OF THE INVENTION

Various designs and constructions of touch control panels or touch control devices are available currently, for example, from the relationship between divided voltage and location to determine the location of touch or depression of the touch control device. However, each known technique has its own drawbacks. In the reference mentioned above, the resistance between the first and second conductive layers has to be large enough so as to ensure the precision in detection.

Thus, an objective of the present invention is to provide a device for scanning and detecting a touch point of a touch control panel, which provides a simply assembled structure comprised of a first conductive layer, a second conductive layer, a driving/scanning circuit, and a scan sensing circuit, together with simply operable sequential driving/scanning and sequential scanning/detection, for determination of the touch point of the touch control panel.

Another objective of the present invention is to provide a method for scanning and detecting touch points of a touch control panel, which can detect one or more touch locations on the touch control panel by simple driving/scanning operation carried out on elongate conductive strips of a first conductive layer and scanning/detection operation carried out over elongate conductive strips of a second conductive layer.

In accordance with the present invention, a solution to the above problems resides in that a touch control panel comprises a first conductive layer that is comprised of a plurality of elongate conductive strips and a second conductive layer that is comprised of a plurality of elongate conductive strips, a driving/scanning circuit connected via driving/scanning lines to the elongate conductive strips of the first conductive layer respectively and a scan sensing circuit connected via scanning lines to the elongate conductive strips of the second conductive layer respectively. A micro-controller is connected to the driving/scanning circuit and the scan sensing circuit. The driving/scanning circuit carries out one-end-sequential-driving, or sequential both-end-simultaneous-driving on the elongate conductive strips of the first conductive layer of the touch control panel, while the scan sensing circuit carries out one-end-sequential-scanning, both-end-sequential-scanning, or sequential both-end-simultaneous-scanning operation over the elongate conductive strips of the second conductive layer for detecting the touch location of the touch control panel.

In accordance with the present invention, to carry out detection of touch locations of a touch control panel, one or more touch locations can be detected by means of simply operable driving/scanning of the elongate conductive strips of a first conductive layer and scanning/detection operation over elongate conductive strips of the second conductive layer. Large resistance between the first and second conductive layers that is required by the conventional technology is not needed. Compared to the known techniques, the present invention is advantageous in being simple and efficient in respect of circuit design and determination of touch location.

### BRIEF DESCRIPTION OF THE DRAWINGS

The present invention will be apparent to those skilled in the art by reading the following description of preferred embodiments thereof and the best mode for carrying out the present invention, with reference to the attached drawings, in which:
Figure 1 illustrates a system block diagram in accordance with a first embodiment of the present invention;
Figure 2 is an exploded view illustrating the assembly of the opposite first and second substrates of Figure 1;
Figure 3 shows a control flow chart that the present invention takes to carry out scanning operation over the touch control panel;
Figure 4 shows a sequence table that the first embodiment of the present invention carries out one-end-sequential-driving and one-end-sequential-scanning/detection operation on the touch control panel;
Figure 5 is a schematic view illustrating the scanning/detection operation of multiple touch points that the present invention carries out;
Figure 6 is also a schematic view illustrating the scanning/detection operation of multiple touch points that the present invention carries out;
Figure 7 is also a schematic view illustrating the scanning/detection operation of multiple touch points that the present invention carries out;
Figure 8 is also a schematic view illustrating the scanning/detection operation of multiple touch points that the present invention carries out;
Figure 9 shows a system block diagram in accordance with a second embodiment of the present invention;
Figure 10 shows a sequence table that the second embodiment of the present invention carries out one-end-sequential-driving and both-end-sequential-scanning operation on the touch control panel;
Figure 11 shows a sequence table that the second embodiment of the present invention carries out one-end-sequential-driving and sequential both-end-simultaneous-scanning operation on the touch control panel;
Figure 12 shows a system block diagram in accordance with a third embodiment of the present invention;
Figure 13 shows a sequence table that the third embodiment of the present invention carries out sequential both-end-simultaneous-driving and one-end-sequential-scanning operation on the touch control panel;
Figure 14 shows a system block diagram in accordance with a fourth embodiment of the present invention; and
Figure 15 shows a sequence table that the fourth embodiment of the present invention carries out sequential both-end-simultaneous-driving and sequential both-end-simultaneous-scanning operation on the touch control panel.

### DETAILED DESCRIPTION OF THE PREFERRED EMBODIMENTS

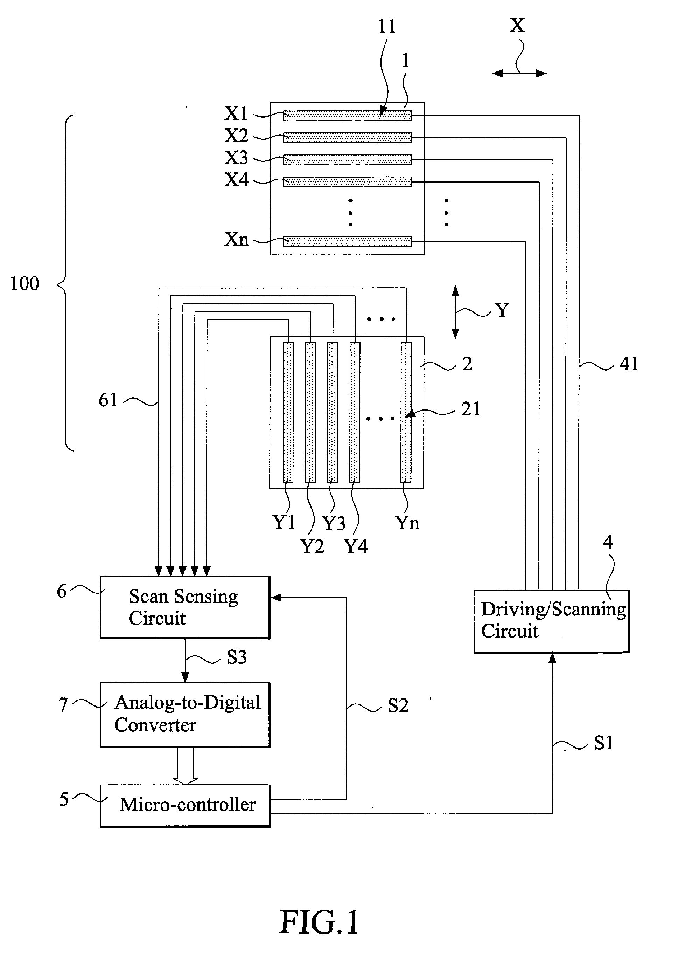

With reference to the drawings and in particular to Figure 1, which illustrates a system block diagram of a touch control panel in accordance with a first embodiment of the present invention, the touch control panel, which is generally designated at 100, comprises a first substrate 1 and a second, opposite substrate 2. The first substrate 1 has a bottom surface on which a first conductive layer 11 is formed. The second substrate 2 has a top surface on which a second conductive layer 21 is formed. For the state-of-art technology of touch control panels, it is often to coat a layer of transparent conductor, such as ITO conductive layer, on a surface of a glass substrate to serve as both the first conductive layer 11 and the second conductive layer 21.

The first conductive layer 11 is comprised of a plurality of elongate conductive strips X1, X2, X3, X4, ..., Xn, which are parallel to but do not engage each other. Each elongate conductive strip X1, X2, X3, X4, ..., Xn is extended in a first direction X on the bottom surface of the first substrate 1.

Each elongate conductive strip X1, X2, X3, X4, ..., Xn has an end, which is connected to a driving/scanning circuit 4 by driving/scanning lines 41. Each elongate conductive strip X1, X2, X3, X4, ..., Xn has an opposite end, which is set in an open condition.

The second conductive layer 21 is comprised of a plurality of elongate conductive strips Y1, Y2, Y3, Y4, ..., Yn, which are parallel to but do not engage each other. Each elongate conductive strip Y1, Y2, Y3, Y4, ..., Yn is extended in a second direction Y on the top surface of the second substrate 2.

Each elongate conductive strip Y1, Y2, Y3, Y4, ..., Yn of the second conductive layer 21 has an end, which is connected to a scan sensing circuit 6 by scanning lines 61. Each elongate conductive strip Y1, Y2, Y3, Y4, ..., Yn also has an opposite end, which is set in an open condition.

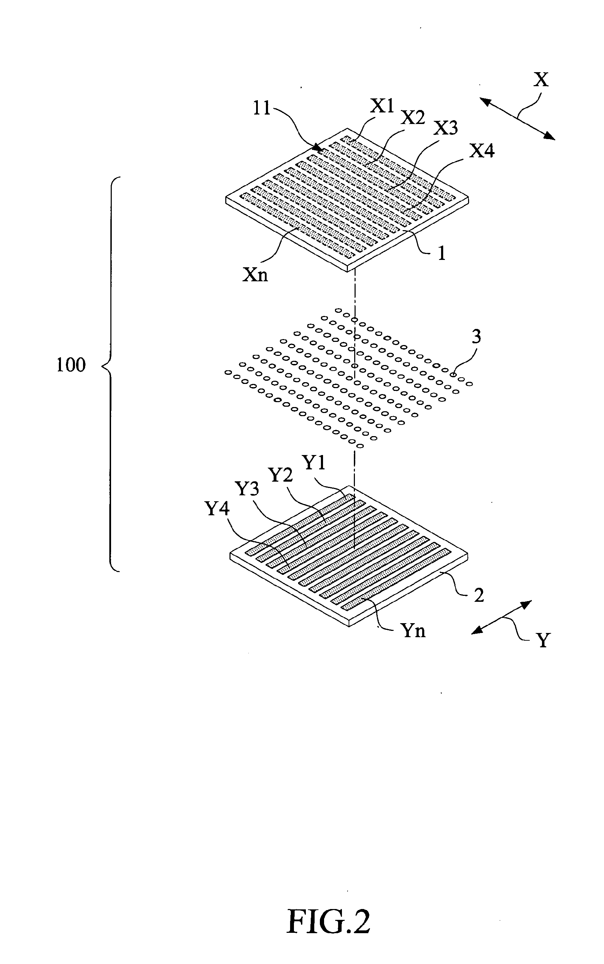

Figure 2 shows the first conductive layer 11 opposing the second conductive layer 21 when the first and second substrates 1, 2 are assembled together. The first and second substrates 1, 2 are spaced from each other by a plurality of insulation spacer 3.

A micro-controller 5 controls, via a scan control signal S1, the driving/scanning circuit 4 to drive/scan over the elongate conductive strips X1, X2, X3, X4, ..., Xn of the first conductive layer 11 in a sequentially scanning manner. The micro-controller 5 also controls, via a scan control signal S2, the scan sensing circuit 6 to carry out sequential scanning over the elongate conductive strips Y1, Y2, Y3, Y4, ..., Yn to detect physical engagement of any one of the elongate conductive strips Y1, Y2, Y3, Y4, ..., Yn with the first conductive layer 11, as being physically depressed/touched, and the location of depression/touch.

The scanning operation that the scan sensing circuit 6 performs scanning over the elongate conductive strips Y1, Y2, Y3, Y4, ..., Yn of the second conductive layer 21 provides a scan sensing signal S3, which is converted by an analog-to-digital converter circuit 7 into a digital scan sensing signal, and the digital scan sensing signal is applied to the micro-controller 5.

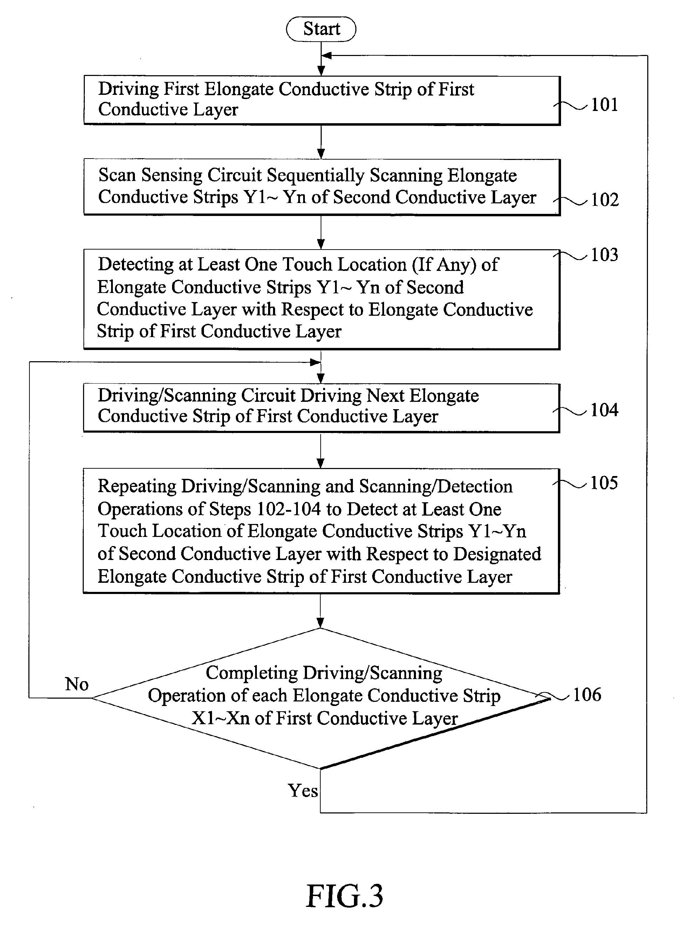

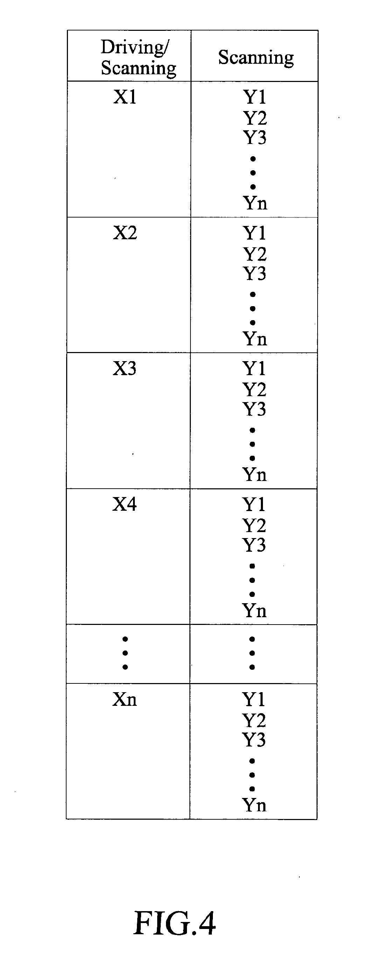

Figure 3 shows a control flow chart that demonstrates the scanning operation that the present invention performs over the touch control panel and Figure 4 shows a scanning sequence table for performing one-end-sequential-driving operation and one-end-sequential-scanning operation in accordance with the first embodiment of the present invention. The control flow will be described with reference to Figures 1, 3, and 4.

At first, the micro-controller 5 uses the driving/scanning circuit 4 to drive the first elongate conductive strip X1 of the first conductive layer 11 (step 101), and then the scan sensing circuit 6 sequentially scans and detects the elongate conductive strips Y1, Y2, Y3, Y4, ..., Yn of the second conductive layer 21 (step 102). As such, at least one touch location (if any) of the elongate conductive strips Y1, Y2, Y3, Y4, ..., Yn of the second conductive layer 21 with respect to the first elongate conductive strip X1 of the first elongate conductive layer 11 is detected (step 103).

After the scanning/detection of the elongate conductive strips Y1, Y2, Y3, Y4, ..., Yn of the second conductive layer 21 with respect to the first elongate conductive strip X1 is completed, the driving/scanning circuit 4 drives the next elongate conductive strip (namely the second elongate conductive strip X2) of the first conductive layer 11 (step 104) and then the scan sensing circuit 6 performs sequential scanning over the elongate conductive strips Y1, Y2, Y3, Y4, ..., Yn of the second conductive layer 21.

After the driving/scanning operation of the last elongate conductive strip Xn of the first conductive layer 11 is completed, the driving/scanning and scanning/detection operations of the previous steps 102-104 are repeated (step 105) to detect at least one touch location of the elongate conductive strips Y1, Y2, Y3, Y4, ..., Yn of the second conductive layer 21 with respect to a designated elongate conductive strip X1, X2, X3, X4, ..., Xn of the first conductive layer 11.

After the driving/scanning operation of each elongate conductive strip X1, X2, X3, X4, ..., Xn of the first conductive layer 11 is completed (step 106), the control flow goes back to step 101 to repeat the previously described driving/scanning and scanning operations.

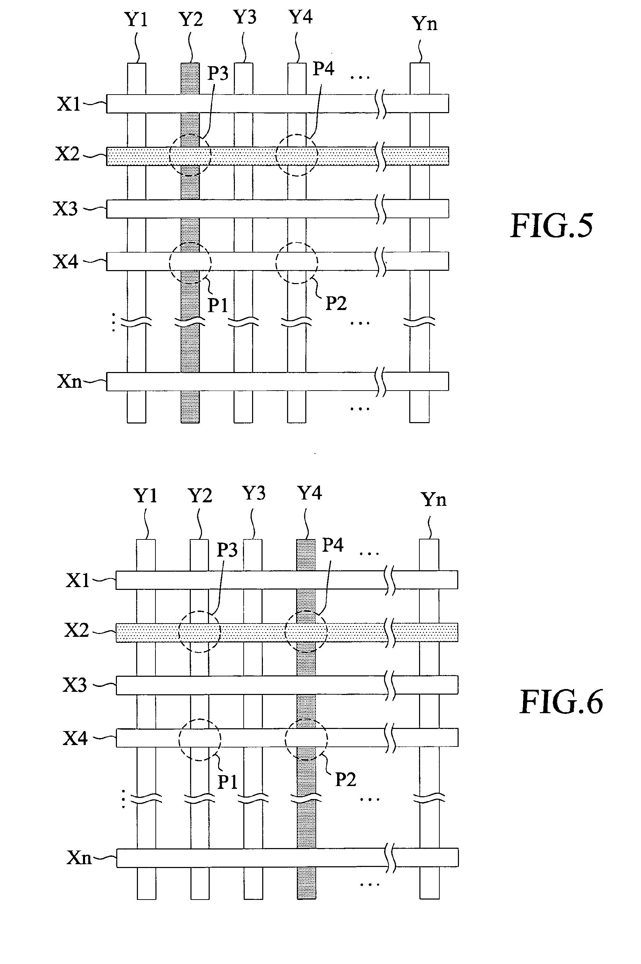

Figure 5 shows an example illustrating scanning/detection operation for multiple touch locations in accordance with the present invention. To detect an event of four touch locations P1, P2, P3, P4 occurring on the touch control panel, the driving/scanning circuit 4 drives the second elongate conductive strip X2 of the first conductive layer 11 and the scan sensing circuit 6 performs sequential scanning over the second elongate conductive strip Y2 of the second conductive layer 21. Consequently, the touch location P3 is identified and the coordinates of the touch location P3 are determined. As shown in Figure 6, when the scan sensing circuit 6 performs sequential scanning/detection over the fourth elongate conductive strip Y4 of the second conductive layer 21, the touch location P4 is identified and the coordinates thereof are determined.

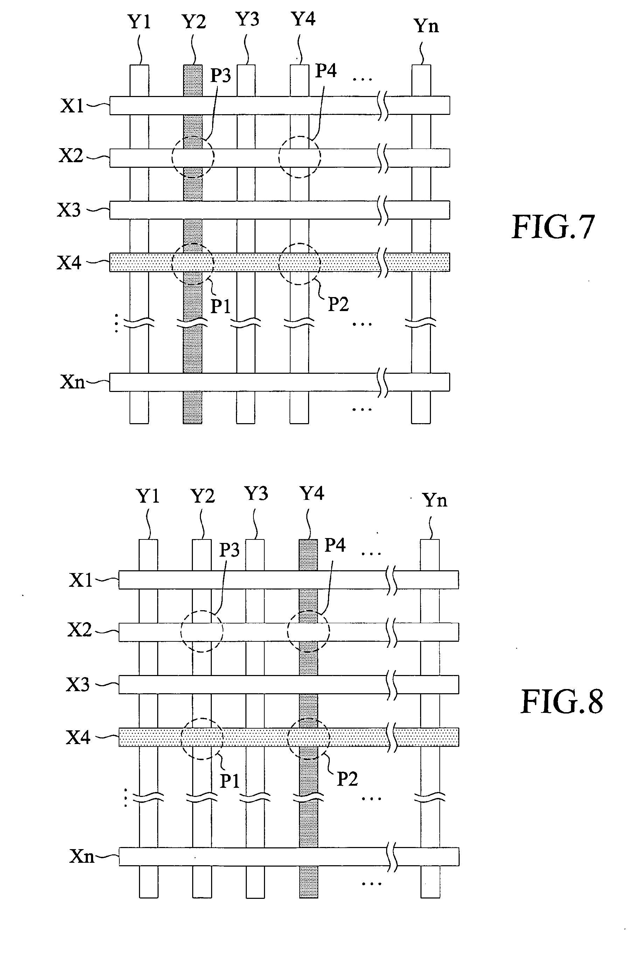

As shown in Figure 7, when the driving/scanning circuit 4 drives the fourth elongate conductive strip X4 of the first conductive layer 11 and the scan sensing circuit 6 performs sequential scanning/detection over the second elongate conductive strip Y2 of the second conductive layer 2, the touch location P1 is identified and the coordinates thereof are determined. As shown in Figure 8, when the scan sensing circuit 6 performs sequential scanning over the fourth elongate conductive strip Y4 of the second conductive layer 21, the touch location P2 is identified and the coordinates thereof are determined. With such an operation of sequential driving/scanning and sequential scanning/detection as described above, all the touch locations occurring on the touch control panel can be detected.

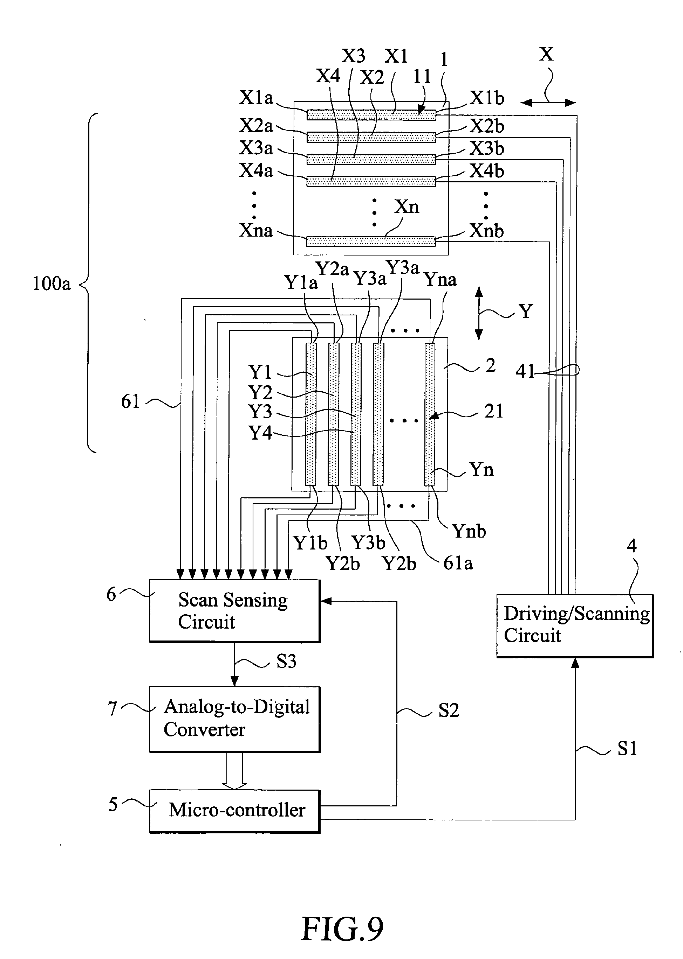

Figure 9 shows a system block diagram of a touch control device 100a in accordance with a second embodiment of the present invention. The touch control device 100a of the second embodiment is substantially identical to the first embodiment (touch control device 100) and comprises a first conductive layer 11 that is comprised of a plurality of elongate conductive strips X1, X2, X3, X4, ..., Xn, which are parallel to but do not engage each other. Each elongate conductive strip X1, X2, X3, X4, ..., Xn of the first conductive layer 11 has a first end X1a, X2a, X3a, X4a, ..., Xna and a second, opposite end, X1b, X2b, X3b, X4b, ..., Xnb, wherein the second end X1b, X2b, X3b, X4b, ..., Xnb are connected to a driving/scanning circuit 4 by driving/scanning lines 41.

The touch control panel 100a also comprises a second conductive layer 21 that is comprised of a plurality of elongate conductive strips Y1, Y2, Y3, Y4, ..., Yn, which are parallel to but do not engage each other. Each elongate conductive strip Y1, Y2, Y3, Y4, ..., Yn of the second conductive layer 21 has a first end Y1a, Y2a, Y3a, Y4a, ..., Yna and a second, opposite end, Y1b, Y2b, Y3b, Y4b, ..., Ynb. The difference between the second embodiment and the first embodiment resides in that the second conductive layer 21 of the second embodiment touch control panel 100a are constructed so that the first end Y1a, Y2a, Y3a, Y4a, ..., Yna are connected to a scan sensing circuit 6 via the scanning lines 61, and the second ends Y1b, Y2b, Y3b, Y4b, ..., Ynb thereof are connected to the scan sensing circuit 6 by other scanning lines 61a. Thus, the scan sensing circuit 6 can carry out sequential scanning operation over the first end Y1a, Y2a, Y3a, Y4a, ..., Yna and the second end Y1b, Y2b, Y3b, Y4b, ..., Ynb of each elongate conductive strips Y1, Y2, Y3, Y4, ..., Yn via the scanning lines 61, 61a, or both-end-simultaneous-scanning operation can be performed.

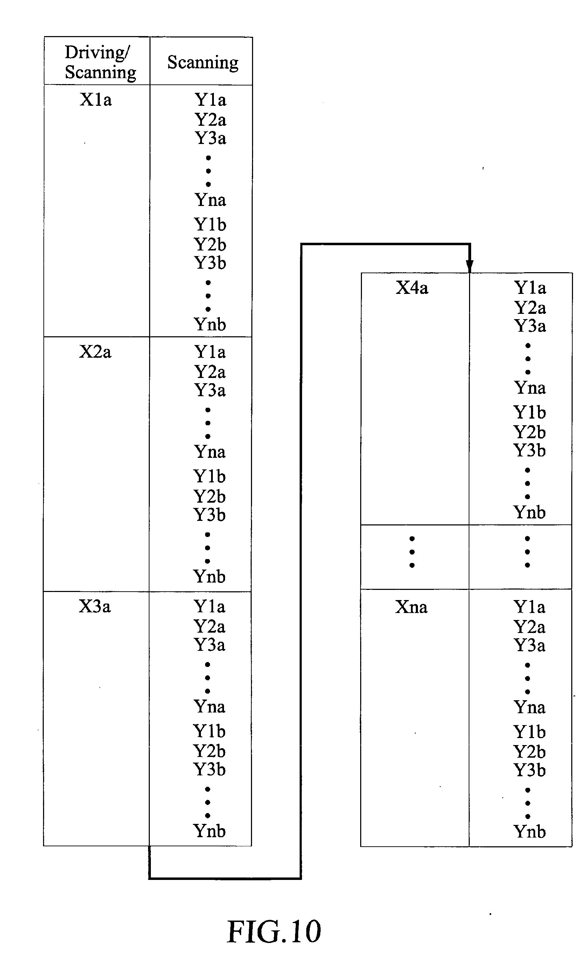

Figure 10 shows a sequence table that the second embodiment of the present invention takes to carry out one-end-sequential-driving and both-end-sequential-scanning/detection operation. When the elongate conductive strip X1 of the first conductive layer 11 is driven by the driving/scanning circuit 4, the scan sensing circuit 6 carries out scanning operation over the first end Y1a, Y2a, Y3a, Y4a, ..., Yna and the second end Y1b, Y2b, Y3b, Y4b, ..., Ynb of each elongate conductive strip Y1, Y2, Y3, Y4, ..., Yn in sequence.

Once the scanning/detection is completed, the driving/scanning circuit 4 then drives the elongate conductive strip X2 of the first conductive layer 11 and the scan sensing circuit 6 sequentially scans the first end Y1a, Y2a, Y3a, Y4a, ..., Yna and the second end Y1b, Y2b, Y3b, ..., Ynb of each elongate conductive strip Y1, Y2, Y3, ..., Yn. The driving/scanning and detection operations are repeated for all elongate conductive strips of the first and second conductive layers to identify all touch points occurring on touch control panel.

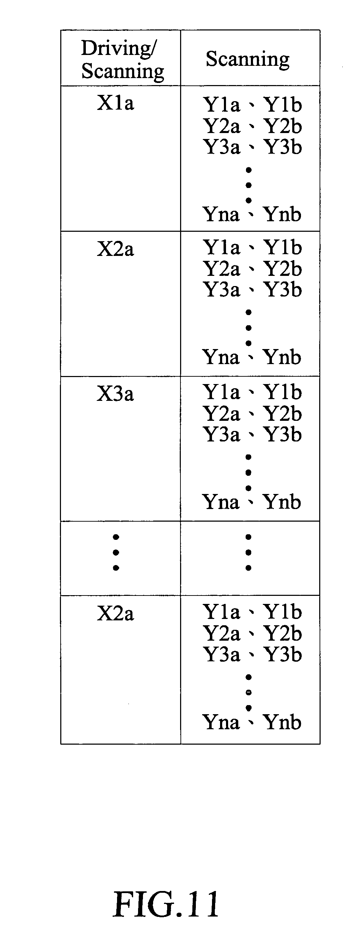

Besides the single-end sequential scanning process illustrated in Figure 10, it is possible to sequentially carry out both-end-simultaneous-scanning operation as illustrated in Figure 11, which shows a sequence table that the scan sensing circuit 6 takes to carry out simultaneous scanning operation over both the first end Y1a, Y2a, Y3a, Y4a, ..., Yna and the second end Y1b, Y2b, Y3b, Y4b, ..., Ynb of each elongate conductive strip Y1, Y2, Y3, Y4, ..., Yn at the same time. When the elongate conductive strip X1 of the first conductive layer 11 is driven by the driving/scanning circuit 4, the scan sensing circuit 6 carries out scanning operation over the first end Y1a and the second end Y1b of the elongate conductive strip Y1 at the same time and then carry out the scanning operation over each elongate conductive strips Y2 to Yn in sequence by simultaneously scanning the first and second ends of each of the elongate conductive strips Y2-Yn.

Once the scanning/detection is completed, the driving/scanning circuit 4 then drives the elongate conductive strip X2 of the first conductive layer 11 and the scan sensing circuit 6 carries out sequential both-end-simultaneous-scanning operation by simultaneously scanning both the first end Y1a, Y2a, Y3a, Y4a, ... , Yna and the second end Y1b, Y2b, Y3b, ... , Ynb of each individual elongate conductive strip Y1, Y2, Y3, ..., Yn and sequentially scanning the elongate conductive strips. The driving/scanning and detection operations are repeated for all elongate conductive strips of the first and second conductive layers to identify all touch points occurring on touch control panel.

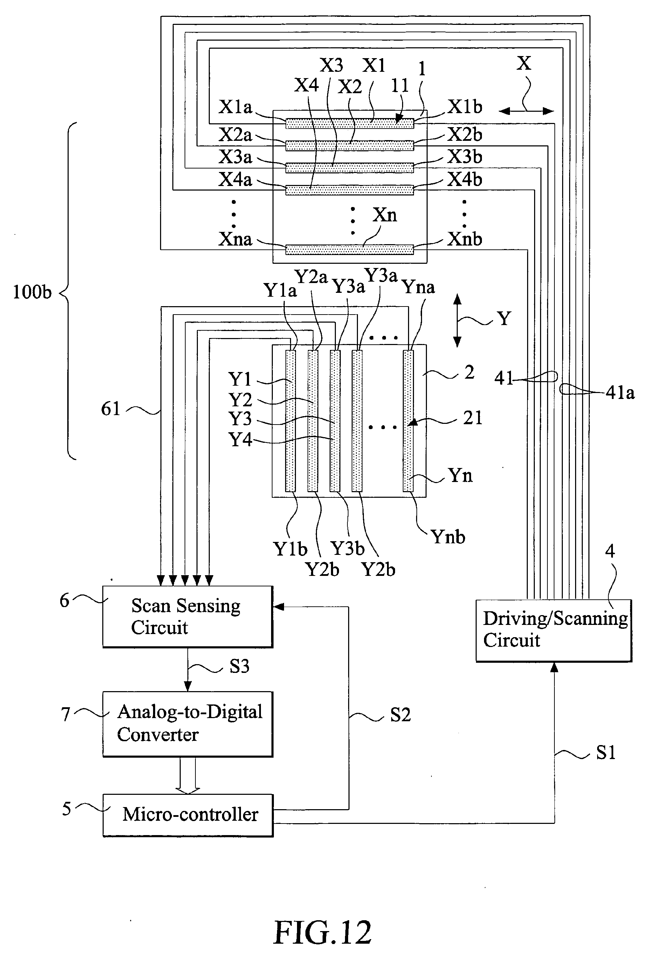

Figure 12 shows a system block diagram of a touch control device 100b in accordance with a third embodiment of the present invention. The touch control device 100b of the third embodiment comprises a first conductive layer 11 that is comprised of a plurality of elongate conductive strips X1, X2, X3, X4, ..., Xn, which are parallel to but do not engage each other. Each elongate conductive strip X1, X2, X3, X4, ..., Xn of the first conductive layer 11 has a first end X1a, X2a, X3a, X4a, ..., Xna and a second, opposite end, X1b, X2b, X3b, X4b, ..., Xnb, wherein the second ends X1b, X2b, X3b, X4b, ..., Xnb are connected to a driving/scanning circuit 4 by driving/scanning lines 41 and the first ends X1a, X2a, X3a, X4a, ..., Xna are connected to the driving/scanning circuit 4 by other driving/scanning lines 41a.

The touch control panel 100b also comprises a second conductive layer 21 that is comprised of a plurality of elongate conductive strips Y1, Y2, Y3, Y4, ..., Yn, which are parallel to but do not engage each other. Each elongate conductive strip Y1, Y2, Y3, Y4, ..., Yn of the second conductive layer 21 has a first end Y1a, Y2a, Y3a, Y4a, ..., Yna and a second, opposite end, Y1b, Y2b, Y3b, Y4b, ..., Ynb, wherein the first ends Y1a, Y2a, Y3a, Y4a, ..., Yna are connected to a scan sensing circuit 6 via scanning lines 61 and the second ends Y1b, Y2b, Y3b, Y4b, ..., Ynb are set in an open condition.

In this third embodiment, the driving/scanning circuit 4 can carry out sequential both-end-simultaneous-scanning operation over each elongate conductive strip X1, X2, X3, X4, ..., Xn of the first conductive layer 11.

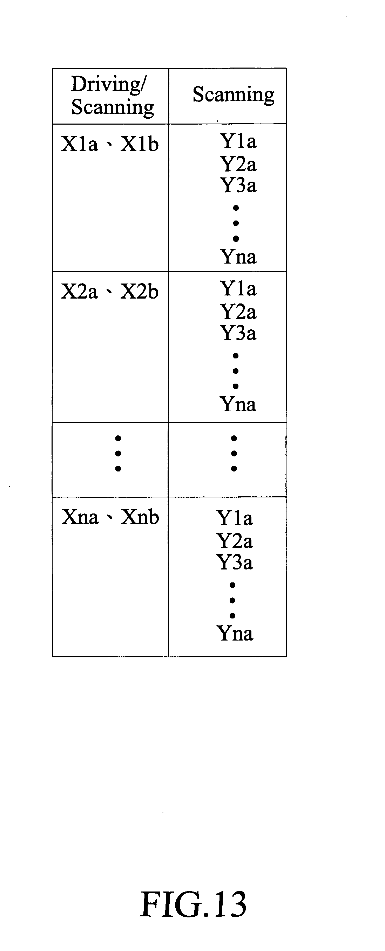

Figure 13 shows a sequence table that the third embodiment of the present invention takes to carry out sequential both-end-simultaneous-driving and one-end-sequential-scanning operation. When the driving/scanning circuit 4 carries out sequential both-end-simultaneous-scanning operation over each elongate conductive strip X1, X2, X3, X4, ..., Xn of the first conductive layer 11, the sequence is X1a, X1b; X2a, X2b; X3a, X3b; X4a, X4b; ..., Xna, Xnb. Each time both ends of one of the elongate conductive strips X1, X2, X3, X4, ..., Xn are simultaneously scanned, the scan sensing circuit 6 carries out sequential scan sensing over the first end Y1a, Y2a, Y3a, Y4a, ..., Yna of each elongate conductive strip Y1, Y2, Y3, Y4, ..., Yn.

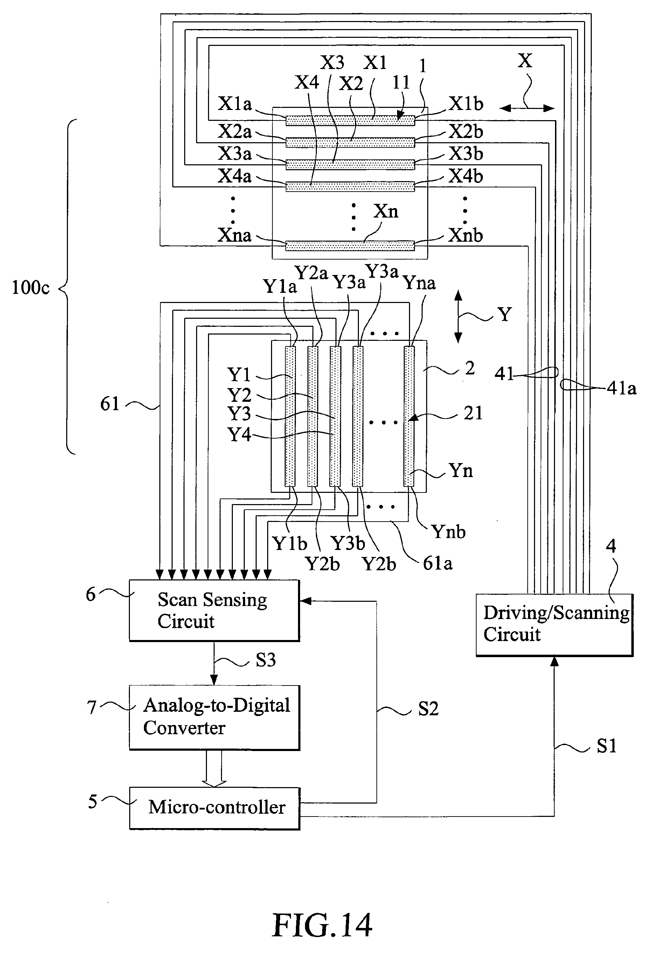

Figure 14 shows a system block diagram of a touch control device 100c in accordance with a fourth embodiment of the present invention. The touch control device 100c of the fourth embodiment comprises a first conductive layer 11 that is comprised of a plurality of elongate conductive strips X1, X2, X3, X4, ..., Xn, which are parallel to but do not engage each other. Each elongate conductive strip X1, X2, X3, X4, ..., Xn of the first conductive layer 11 has a first end X1a, X2a, X3a, X4a, ..., Xna and a second, opposite end, X1b, X2b, X3b, X4b, ..., Xnb, wherein the second ends X1b, X2b, X3b, X4b, ..., Xnb are connected to a driving/scanning circuit 4 by driving/scanning lines 41 and the first ends X1a, X2a, X3a, X4a, ..., Xna are connected to a driving/scanning circuit 4 by other driving/scanning lines 41a. The touch control panel 100c also comprises a second conductive layer 21 that is comprised of a plurality of elongate conductive strips Y1, Y2, Y3, Y4, ..., Yn, which are parallel to but do not engage each other. Each elongate conductive strip Y1, Y2, Y3, Y4, ..., Yn of the second conductive layer 21 has a first end Y1a, Y2a, Y3a, Y4a, ..., Yna and a second, opposite end, Y1b, Y2b, Y3b, Y4b, ..., Ynb, wherein the first ends Y1a, Y2a, Y3a, Y4a, ..., Yna are connected to a scan sensing circuit 6 via scanning lines 61 and the second ends Y1b, Y2b, Y3b, Y4b, ..., Ynb are connected to the scan sensing circuit 6 via other scanning lines 61a.

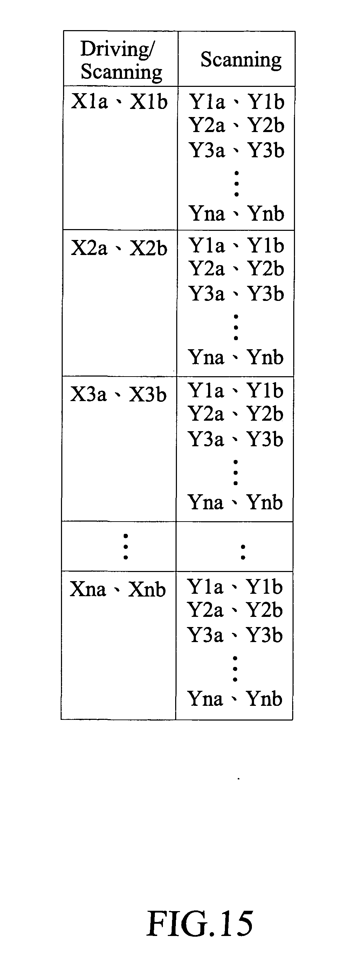

Figure 15 shows a sequence table that the fourth embodiment of the present invention takes to carry out sequential both-end-simultaneous-driving and sequential both-end-simultaneous-scanning operation. When the driving/scanning circuit 4 carries out sequential both-end-simultaneous-scanning operation over each elongate conductive strip of the first conductive layer 11, the sequence is X1a, X1b; X2a, X2b; X3a, X3b; X4a, X4b; ..., Xna, Xnb. Each time one of the elongate conductive strips is driven, the scan sensing circuit 6 carries out sequential both-end-simultaneous-scanning over the first end Y1a, Y2a, Y3a, Y4a, ..., Yna and the second end Y1b, Y2b, Y3b, Y4b, ..., Ynb of each elongate conductive strip Y1, Y2, Y3, Y4, ..., Yn and sequence is Y1a, Y1b; Y2a, Y2b; Y3a, Y3b; Y4a, Y4b; ...; Yna, Ynb.

## Claims

1. A touch control panel, comprising:
a first substrate (1) forming a first conductive layer (11) which comprises a plurality of elongate conductive strips (X1, ..., Xn) that are substantially parallel to but do not engage each other, the elongate conductive strips (X1, ..., Xn) extending in a first direction and having opposite first and second ends (X1a, ..., Xna; X1b, ..., Xnb);
a second substrate (2) forming a second conductive layer (21), which comprises a plurality of elongate conductive strips (Y1, ..., Yn) that are substantially parallel to but do not engage each other, the elongate conductive strips (Y1, ..., Yn) extending in a second direction and having opposite first and second ends (Y1a, ..., Yna; Y1b, ..., Ynb), the first substrate (1) and the second substrate (2) being spaced from each other by insulation spacers (3);
a driving/scanning circuit (4) connected to the elongate conductive strips (X1, ..., Xn) of the first conductive layer (11) via driving/scanning lines (41) respectively;
a scan sensing circuit (6) connected to the elongate conductive strips (Y1, ..., Yn) of the second conductive layers (21) via scanning lines (61) respectively; and
a micro-controller (5) connected to the driving/scanning circuit (4) and the scan sensing circuit (6);
**characterized in that** the driving/scanning circuit (4) sequentially drives the elongate conductive strips (X1, ..., Xn) of the first conductive layer (11) and at the time when the driving/scanning circuit (4) sequentially drives one of the elongate conductive strips (X1, ..., Xn) of the first conductive layer (11), the scan sensing circuit (6) sequentially scans/detects the elongate conductive strips (Y1, ..., Yn) of the second conductive layer (21) to detect a touch location occurring on the touch control panel.

2. The touch control panel as claimed in Claim 1, **characterized in that** the first ends (X1a, ..., Xna) of the elongate conductive strips (X1, ..., Xn) of the first conductive layers (11) are connected to the driving/scanning circuit (4) by the driving/scanning lines (41) and the second ends (X1b, ..., Xnb) of the elongate conductive strips (X1, ..., Xn) of the first conductive layers (11) are open, and **characterized in that** the first ends (Y1a, ..., Yna) of the elongate conductive strips (Y1, ..., Yn) of the second conductive layers (21) are connected to the scanning/detection circuit (4) by the scanning lines (61) and the second ends (Y1b, ..., Ynb) of the elongate conductive strips (Y1, ..., Yn) of the second conductive layers (21) are open.

3. The touch control panel as claimed in Claim 1, **characterized in that** the first ends (X1a, ..., Xna) of the elongate conductive strips (X1, ..., Xn) of the first conductive layers (11) are connected to the driving/scanning circuit (4) by the driving/scanning lines (41) and the second ends (X1b, ..., Xnb) of the elongate conductive strips (X1, ..., Xn) of the first conductive layers (11) are open, and **characterized in that** the first and second ends (Y1a, ..., Yna; Y1b, ... , Ynb) of the elongate conductive strips (Y1, ... , Yn) of the second conductive layers (21) are connected to the scan sensing circuit (6) by the scanning lines (61; 61a).

4. The touch control panel as claimed in Claim 1, **characterized in that** the first and second ends (X1a, ... , Xna; X1b, ..., Xnb) of the elongate conductive strips (X1, ..., Xn) of the first conductive layers (11) are connected to the driving/scanning circuit (4) by the driving/scanning lines (41), and **characterized in that** the first ends (Y1a, ..., Yna) of the elongate conductive strips (Y1, ..., Yn) of the second conductive layers (21) are connected to the scan sensing circuit (6) by the scanning lines (61) and the second ends (Y1b, ..., Ynb) of the elongate conductive strips (Y1, ..., Yn) of the second conductive layers (21) are open.

5. The touch control panel as claimed in Claim 1, **characterized in that** the first and second ends (X1a, ..., Xna; X1b, ..., Xnb) of the elongate conductive strips (X1, ..., Xn) of the first conductive layers (11) are connected to the driving/scanning circuit (4) by the driving/scanning lines (41), and **characterized in that** the first and second ends (Y1a, ... , Yna; Y1b, ..., Ynb) of the elongate conductive strips (Y1, ..., Yn) of the second conductive layers (21) are connected to the scan sensing circuit (6) by the scanning lines (61; 61 a).

6. A method for scanning/detecting a touch location in a touch control panel that comprises a first substrate (1) forming a first conductive layer (11) that comprises a plurality of elongate conductive strips (X1, ..., Xn) that are parallel to but do not engage each other and extend in a first direction to form opposite first and second ends (X1a, ..., Xna; X1b, ..., Xnb), and a second substrate (2) forming a second conductive layer (21) that comprises a plurality of elongate conductive strips (Y1, ..., Yn) that is parallel to but do not engage each other and extend in a second direction to form opposite first and second ends (Y1a, ..., Yna; Y1b, ..., Ynb), the first and second substrates (1; 2) being spaced from each other by insulation spacers (3), the method comprising the following steps;
(a) employing a driving/scanning circuit (4) to drive one of the elongate conductive strips (X1, ..., Xn) of the first conductive layer (11);
(b) employing a scan sensing circuit (6) to sequentially scan each elongate conductive strip (Y1, ..., Yn) of the second conductive layer (21);
(c) detecting at least one touch location on each elongate conductive strips (Y1, ..., Yn) of the second conductive layer (21) with respect to the one of the elongate conductive strips (X1, ..., Xn) of the first conductive layer (11) in accordance with result of scanning that the scan sensing circuit (6) performs over the elongate conductive strips (Y1, ..., Yn) of the second conductive layer (21);
(d) employing the driving/scanning circuit (4) to sequentially drive a next one of the elongate conductive strips (X1, ..., Xn) of the first conductive layer (11);
(e) detecting at least one touch location on each elongate conductive strips (Y1, ..., Yn) of the second conductive layer (21) with respect to each designated one of the elongate conductive strips (X1, ..., Xn) of the first conductive layer (11) in accordance with result of scanning that the scan sensing circuit (6) performs over the elongate conductive strips (Y1, ..., Yn) of the second conductive layer (21); and
(f) repeating steps (a) to (e).

7. The method as claimed in Claim 6, **characterized in that** the driving/scanning circuit (4) sequentially drives the first end (X1a, ..., Xna) of each elongate conductive strip (X1, ..., Xn) of the first conductive layer (11) and the scan sensing circuit (6) carries out sequential scanning over the first end (Y1a, ..., Yna) of each elongate conductive strip (Y1, ..., Yn) of the second conductive layer (21).

8. The method as claimed in Claim 6, **characterized in that** the driving/scanning circuit (4) sequentially drives the first end (X1a, ..., Xna) of each elongate conductive strip (X1, ..., Xn) of the first conductive layer (11) and the scan sensing circuit (6) carries out sequential scanning over the first end (Y1a, ..., Yna) and the second end (Y1b, ..., Ynb) of each elongate conductive strip (Y1, ..., Yn) of the second conductive layer (21).

9. The method as claimed in Claim 6, **characterized in that** the driving/scanning circuit (4) sequentially drives the first end (X1a, ..., Xna) of each elongate conductive strip (X1, ..., Xn) of the first conductive layer (11) and the scan sensing circuit (6) carries out sequential scanning/detection over the elongate conductive strips (Y1, ..., Yn) of the second conductive layer (21) by simultaneously scanning the first and second ends (Y1a, ..., Yna; Y1b, ..., Ynb) of each elongate conductive strip (Y1, ..., Yn) of the second conductive layer (21).

10. The method as claimed in Claim 6, **characterized in that** the driving/scanning circuit (4) sequentially drives the elongate conductive strips (X1, ..., Xn) of the first conductive layer (11) by simultaneously driving both the first and second ends (X1a, ..., Xna; X1b, ..., Xnb) of each elongate conductive strip (X1, ..., Xn) of the first conductive layer (11) and the scan sensing circuit (6) carries out sequential scanning over the elongate conductive strips (Y1, ..., Yn) of the second conductive layer (21) by simultaneously scanning the first and second ends (Y1a, ..., Yna; Y1b, ..., Ynb) of each elongate conductive strip (Y1, ..., Yn) of the second conductive layer (21).
